# EUROPEAN PATENT SPECIFICATION

(11) **EP 2 162 021 B1**
(45) Date of publication and mention of the grant of the patent: **21.03.2018**
(21) Application number: 08775479.2
(22) Date of filing: 13.06.2008
(51) Int. Cl.: A23L 3/3418, A23C 3/08, A23C 9/152, A23C 19/10, A23C 13/10, A23C 3/00

(54) **METHOD OF TREATING FOODSTUFF**
VERFAHREN ZUR BEHANDLUNG VON NAHRUNGSMITTELN
PROCÉDÉ DE TRAITEMENT ALIMENTAIRE

(30) Priority: 15.06.2007 FI 20075448
(43) Date of publication of application: 17.03.2010
(73) Proprietor: Alatossava, Tapani, 00014 Helsingin yliopisto (FI); Munsch-Alatossava, Patricia, 00014 Helsingin yliopisto (FI)
(72) Inventor: Alatossava, Tapani, 00014 Helsingin yliopisto (FI); Munsch-Alatossava, Patricia, 00014 Helsingin yliopisto (FI)
(74) Representative: Seppo Laine Oy
(86) International application number: PCT/FI2008/050354
(87) International publication number: WO 2008/152206

(56) References cited:
- EP-A1- 0 015 184
- EP-A1- 1 568 280
- WO-A1-02/102168
- WO-A1-2006/011801
- WO-A1-2006/133485
- JP-A- 5 049 395
- US-A- 4 935 255
- US-B1- 6 447 828
- DECHEMI S. ET AL.: 'Effect of modified atmospheres on the growth and extracellular enzyme activities of psychorotrophs in raw milk' ENGINEERING IN LIFE SCIENCES vol. 5, no. 4, 2005, pages 350 - 356, XP008124783
- MURRAY S.K. ET AL.: 'Effect of nitrogen flushing on the production of proteinase by psychrotrophic bacteria in raw milk' JOURNAL OF FOOD SCIENCE vol. 48, no. 4, 1983, pages 1166 - 1169, XP008042184
- MUNSCH-ALATOSSAVA P. ET AL.: 'Exclusion of phospholipiase (PLs)-producing bacteria in raw milk flushed with nitrogen gas (N2)' MICROBIOLOGICAL RESEARCH 2008, XP026783554
- DECHEMI S ET AL: "Effect of modified atmospheres on the growth and extracellular enzyme activities of psychorotrophs in raw milk", 20050101, vol. 5, no. 4, 1 January 2005 (2005-01-01) , pages 350-356, XP008124783, DOI: 10.1002/ELSC.200520082

## Description

The present invention relates to a method according to the preamble of Claim 1 of improving the safety, quality and durability of foodstuffs, which are stored in cold or cool conditions, and of the raw materials which are used to produce them.

In a method such as this, the foodstuff or its raw material is treated with nitrogen gas.

Acceptable levels of safety and of quality of foodstuffs and the raw materials which are used in their production are important bases for the activities which are associated with the industrial production of foodstuffs. The criteria defining acceptable standards of safety are, essentially, specified in the legislation governing the food industry, and how that production is put into practice is described in the approved self-imposed code of practice of the production plant in question.

The criteria defining the quality of foodstuffs are determined more by the market competitiveness of the products and by the industrial economic activities of the products than directly by the minimum requirements specified in the legislation; good quality products have a competitive advantage, and it is easier to control the quality of the products when good quality raw materials are used in their production; also, fewer problems of production engineering keep production costs lower. The possibility of extending the shelf-life and lengthen the use-by period of the foodstuffs without compromising safety and quality gives added value to the producer of the foodstuff, and to the foodstuffs trade and the consumer. Accordingly, the means and the methods of maintaining the microbiological safety and quality of foodstuffs and the biomaterials which are used in the production of them are continuously of interest and relevance to the foodstuffs industry.

Controlling a low temperature, i.e. a working cold chain, is a widely used solution model for the purpose mentioned above. A good example of this is the cold chain of raw milk from the dairy cattle farm, through the milk collecting stage, to the dairy. Throughout the whole chain, from the tank milk at the farm to the heat treatment of the raw milk carried out in the dairy, the temperature of the raw milk must be ≤ 6 °C, with the exception of a few special situations (EC No. 853/2004, MMMa 37/2006 and MMMa 134/2006 (Ministry of Agriculture and Forestry, Finland)). Furthermore, the microbiological quality of the farm tank raw milk should be such that the level of somatic cells is ≤ 400,000 cells per ml and that the total plate count (PCA dish cultivation at 30 °C) is ≤ 100,000 per ml, and that the plate count (PCA dish cultivation at 30 °C) of the raw milk which is used in the production of dairy products is below 300,000 per ml (EC No. 853/2004).

By applying a cold chain to raw milk (storage at ≤ 6 °C, but not frozen), it is possible to delay the growth of microbes significantly. However, it is not possible to totally avoid this growth because typically the presence in raw milk of "psychrotrophic microbes", i.e. mainly bacteria which are able to grow at the temperatures required for the storage of raw milk. As a result of this, it is possible to maintain sufficient microbiological quality, as specified in law, of the raw milk at cold storage conditions for a maximum of only a few days, typically for 2-3 days. As a result, raw milk must be collected from the farms at least every second day, and the times for the milk tankers to travel the collection routes must not be too long, for instance they must not exceed 24 hours. In addition, the storage time of the raw milk in the raw milk silo of the receiving dairy must not be very long either, for instance it must not exceed 24 hours.

Consequently, the whole process period of the raw milk is limited by the growth of the psychrotrophs which occur naturally in raw milk in a cold chain. As a result of this growth, the technological quality of the milk is reduced, mainly because of the heat-resistant exoenzymes, namely proteases, lipases and phospholipases, which are mainly produced by bacteria and which decompose biopolymers.

Among the psychrotrophic bacteria, there are both spoiling bacteria (which reduce the quality but not the safety of foodstuffs), the most important of which are the pseudomonases *Bacillus cereus* and *Clostridium tyrobutyricum,* and pathogenic organisms, i.e. disease-causing microbes, including human pathogenic microbes, mainly bacteria, such as *Listeria monocytogenes, Yersinia enterocolitica, Aeromonas hydrophila, Clostridium botulinum* (type E strains) and *Bacillus cereus* (its toxin-producing strains).

All foodstuffs and the raw materials which are used in the production of those foodstuffs have their specific spoiling and pathogenic microbes, which means that the controlling of these microbes is technologically and also by their effect analogous to the above-mentioned controlling of the microflora in raw milk.

Protecting gas technology is widely used in the food industry to control harmful microbiological growth in foodstuffs and their raw materials, and to manage any safety and quality problems that arise from such microbiological growth. Often, the protecting gas applications cannot substitute for the low storage temperature which ensures that the foodstuff or the raw material which is used to manufacture that foodstuff is not spoiled, instead, in most cases, the purpose is to find an optimal combination of storage temperature and protecting gas that will result in the best possible food safety and quality.

The most commonly used protecting gases are oxygen, carbon dioxide and nitrogen and mixtures of these (Phillips, Int. J. Food Science & Technology 31(1996) 463). Each one of these gases has wide range of applications in the food industry, especially in the packaging stage (MAP, modified atmosphere packaging).

Oxygen promotes the growth of aerobic microbes and inhibits the growth of anaerobic microbes.

It has been found that, among the above-mentioned gases, it is mainly carbon dioxide that has antimicrobial effects. However, the effects cannot be generalized, rather they depend on the microbial flora and the biomaterial of the system. Part of the antimicrobial effect can be explained by the reduced pH value, because carbon dioxide is easily dissolved both in the aqueous phase and in the fat phase, unlike for instance nitrogen gas, but in addition, the bacteriostatic effect, i.e. the growth-inhibiting effect, of moulds may be associated with interactions with the components of the membrane and/or the enzymes. However, the carbon dioxide can increase the growth of certain microbes, too, such as funguses or lactic acid bacteria, which growth is not always desirable for the quality of the foodstuffs.

By using carbon dioxide, it is possible to improve the durability of raw milk or to reduce the number of the microbes, mainly the exoenzymes produced by psychrotrophic pseudomonases, and thereby improve the technological quality of the raw milk. It is possible to increase the antimicrobial effects of the carbon dioxide significantly, if it is used at higher pressures than the normal atmospheric pressure. On the other hand, a drop in pH value caused by the dissolving of the carbon dioxide creates problems for the technological properties of milk (for instance curdling of milk in cheese production is strictly pH-dependent), and for the heat treatment of raw milk in a plate heat exchanger (bubbling of the carbon dioxide decreases the performance of the heat treatment). Therefore, carbon dioxide is certainly not widely used for improving the durability of raw milk in cases of a cold chain of raw milk. Instead, it is used in packaging applications for certain milk products, such as fresh cheese or aged cheese, and sour milk products, such as yoghurt and soured cream.

Because carbon dioxide has not proved to be a workable or useful solution in all applications for foodstuffs or in the improving of the durability of the raw materials which are used in the production of foodstuffs, attempts have been made to find out how well nitrogen gas works for the same purpose.

Nitrogen gas is an inert gas which dissolves in water and fat significantly less readily than does carbon dioxide and thus its physicochemical properties make it an interesting alternative for foodstuff applications in which carbon dioxide has not proved to be a workable or a satisfactory solution. In this case, the applicability of not only pure nitrogen gas has been examined, but also different mixtures of nitrogen/carbon dioxide gas or nitrogen/carbon dioxide/oxygen gas.

Nitrogen gas is often used as a gas with which to fill packs explicitly because of its low solubility. Replacing air in a package with nitrogen gas, largely eliminates the chemical reactions which are generated by oxygen contained in the packed product, and this substitution thus improves the chemical and the perceived quality of the product, and also prevents the growth of aerobic microbes which need oxygen to grow (Farber, J. Food Prot. 54(1991)58). With reference to the above, nitrogen is a suitable protecting gas solution for the packing of fatty products in particular, for instance potato crisps and creams or products containing creams.

The applicability of nitrogen gas for improving the durability of foodstuff raw materials has not been extensively documented. With regard to raw milk, there are a few publications which, in addition, describe the effects of pure nitrogen gas (100 % N₂) on the microflora in raw milk or on the microbes (isolated strains) which exist in raw milk and on the protease and lipase activities of these microbes.

A study by Murray et al. (J. Food Sci. 48(1983)1166) showed that pure nitrogen gas only slightly slowed down the growth of the psychrotrophic bacteria in raw milk and that of the lactic acid bacteria at a test temperature of 4 °C, but it effectively prevented the production of the proteolytic exoenzymes by the psychrotrophic bacteria. The test was carried out in a closed vessel, sealed throughout the treatment from the surrounding air. In their study, Skura et al. (Can. Inst. Food Sci. Technol. J. 19(1986)104) demonstrated that in sterile milk, a psychrotrophic *P. fluorescens* strain grew slower at 4 °C, which was the temperature used during their study, and the experiment produced a lower bacteria level in a pure nitrogen atmosphere than in the control culture, which had grown in a normal air mixture, but, again, the proteolytic activity of the strain in the culture in which a pure nitrogen gas prevailed was very low compared with that of the control culture, which shows that the nitrogen gas effectively prevents the psychrotrophic strain from producing protease but the nitrogen has significantly less effect on the growth of the bacterial strain.

In their study, Eyles et al. (Int. J. Food Microbiol. 20(1993)97) did not establish that pure nitrogen is capable of significantly inhibiting the four *Pseudomonas* strains tested at a temperature of 15 °C, which was used in their study. In another study, Dechemi et al. (Eng. Life Sci. 5(2005)350) demonstrated the growth of psychrotrophs in raw milk at a temperature of 7 °C under different protecting gas conditions, including pure nitrogen gas. The test apparatus was a closed system in which contact with the outside air was prevented by means of an air lock. Dechemi et al. identified four separate categories of microbes, and, in addition, they determined the total number of the psychrotrophs by using known dish methods and, furthermore, the levels of protease and lipase activity of the microbes in the raw milk samples under different protecting gas conditions. Among the protecting gases used, nitrogen was the least effective in both preventing the growth of the microbes and in inhibiting the lipase activity. With regard to the effect of inhibiting the protease activity, pure nitrogen gas was neither the best nor the worst one among the gas alternatives tested.

The findings of the studies referred to above are partly contradictory in respect of the effect of nitrogen on the protease activities of the psychrotrophs in raw milk, and they show that pure nitrogen, as used in the systems tested, did not have a strong inhibitory effect on the growth of the psychrotrophs in any of the microbe groups studied. Nonetheless, of the four microbe groups studied, nitrogen had the strongest effect on the pseudomonases.

Protecting gas technology has also been dealt with in patent literature. Accordingly, in JP Patent Application No. JP61124361A in 1986, an invention is described in which a pack of milk is filled, substituting nitrogen for oxygen in the system in order to generate a well perceived milk quality and a long durability time. Similarly, in US Patent No. 6,447,828 B1 in 2002, an invention is described in which it is possible to reduce the smell in milk that is caused by sterilisation, by using nitrogen gas which substitutes for the oxygen in the system. In JP Patent Application No. 5049395 A in 1993, an invention is described in which nitrogen gas is led into a container used for mixing raw milk, the aim being to prevent the growth of a bacterial strain, to avoid aggregation and, above all, to maintain the freshness. In EP Patent Application No. 0 015 184 A in 1980, an invention is described in which the growth of psychrotrophic bacteria in milk in cold storage, particularly during the storage and the transportation of the milk, is prevented by using nitrogen and carbon dioxide gases either one after another or simultaneously as a mixture, and by removing the oxygen from the system and by reducing the pH value of the milk.

As demonstrated in the survey of the literature above, not a single publication describes a reliable method with which it is possible effectively and affordably to prevent particularly the growth of psychrotrophic microbes in cold storage foodstuffs.

It is an aim of the present invention to eliminate at least part of the disadvantages associated with known technology and to provide a novel solution for treating foodstuffs and raw materials for foodstuffs.

In particular, it is an aim of the present invention to provide a method of preventing the growth of psychrotrophic and mesophilic microbes which produce phospholipase.

The present invention is based on the unexpected finding that when a sufficient quantity of pure nitrogen gas is introduced into a foodstuff or foodstuff raw material which is stored at a lowered temperature, i.e. at cold or cool conditions, it is possible to prevent totally or almost totally the growth of psychrotrophic or similar harmful microbes.

In connection with the present invention, we have discovered that an essentially pure nitrogen gas (N₂) prevents significantly the growth of microbes and in that case most evidently has a bactericidal effect on a group of bacteria which secrete large quantities of phospholipases, i.e. which are phospholipase active (on a PCA lecithin substrate, a characteristic zone of precipitated fats is generated around the colony).
It has been found that the bacterial group which is sensitive to nitrogen, also includes bacterial species and/or strains which produce phospholipases associated with which is pathogenicity, a feature which is characteristic of these microbes, i.e. phospholipase is at least one if not the only virulence factor. The effect of the nitrogen gas is so good that according the present solution it is possible to carry out the treatment in an open vessel or system, in which case the present invention is also suitable for use in practical conditions, in which the milk is always in contact with the surrounding air before it is delivered (for further processing).

According to the present invention, nitrogen gas is used to such an extent that it makes it possible to prevent the growth of the psychrotrophic and mesophilic microbes which produce phospholipase in the foodstuff or the foodstuff raw material.

The microbe count in the foodstuff or foodstuff raw material, according to the present invention, is, following a treatment period of four days, still below 5 log CFU/ml or, in the case of solid matter, below approximately 5 log CFU/g, respectively.

More specifically, the method according to the present invention is mainly characterized by what is stated in the characterization part of Claim 1.

Considerable advantages are obtained by means of the present invention. Thus, the nitrogen gas treatment according to the present invention makes it possible to effectively eliminate the bacteria which produce large quantities of phospholipase, i.e. phospholipase-positive bacteria, from the foodstuff or from the raw material used in the production of the foodstuff, in which case, at the same time, from the biomaterial are eliminated a group of pathogenic bacteria or bacteria presenting a risk to health, and bacteria which spoil the technological quality of the fat of the material.

Cold storage and the nitrogen gas method complement each other, and therefore suitable combinations of each method offer improvements to the safety and quality of food in the best possible way. In this case, it is possible to extend for instance the cold storage chain without compromising the quality or to improve the microbiological quality of the raw material or the foodstuff which is produced by means of the existing cold chain. Both of these methods have wide economic significance extending across the entire food production chain.

The nitrogen gas method according to the present invention can be applied as an alternative to a traditional cold storage system, in situations where it is not possible to use cold storage, for financial reasons or because the logistic or technical structures are absent. The nitrogen gas method is particularly suitable in cases where oxygen, or air, easily causes chemical and perceived deterioration in the quality of the object biomaterial and in cases where the fat of the object material is an important component, in which case microbiological and enzymatic deterioration of the fat are the most common quality problems. Among dairy products, such products are, besides raw milk, milk and cream products, ice-cream, butter, sour milk products and fresh cheeses.

With regard to practical applications of nitrogen gas, in for instance the cold chain of raw milk (farm tank, milk transport tanker, factory silo) during the collecting stage of raw milk, it is not in any way possible to work in a closed space, and therefore the open system described in this patent application provides a substantial advantage to the applications.

Furthermore, it should be noted that with the method according to the present invention, it is possible to delay or to prevent, depending on the storage temperature in each case, the growth of other microbes, too, besides psychrotrophic and mesophilic microbes, both of which can be aerobic and anaerobic, in a foodstuff or a foodstuff raw material, without the sporulation or germination processes of the spore-bearing microbes being activated at the same time.

In the following, the invention will be examined in more detail with the help of a detailed explanation and the accompanying drawings.
Figure 1 shows the principle structure of the apparatus,
Figures 2A - 2E are the graphical presentations of the bacterial levels generated in Example 2 (total bacteria levels and the levels of the psychrotrophic, proteolytic and lipolytic bacteria, and, correspondingly, of the phospholipase producing bacteria, p.m.y./ml),
Figures 3A - 3E show the corresponding presentations of the bacterial levels generated in Example 3,
Figures 4A - 4E show the bacterial levels generated in Example 4,
Figures 5A - 5L show the bacterial levels generated in Example 5,
Figure 6 is a bar chart of the number of colonies generated in the haemolysis,
Figures 7A - 7C show the bacteria levels generated in Example 7, and
Figures 8A - 8C show, as bar charts, the bacterial levels generated in Example 8.

Phospholipase is an enzyme which hydrolyses the phospholipid, which is a primary component of cell membranes, in such a way that, as a result, either a free fatty acid (phospholipase A1 and A2, from either point 1 or 2, in said order, and phospholipase B, both fatty acids from point 1 and 2) or an alkali group either in the phosphorylated form (phospholipase C, i.e. lecitinase), which is in the 3-point 3 of phospholipide, or without phosphate (phospholipase D), is released. As a final result of the hydrolysis of the phospholipide, a structural change takes place in the phospholipide part which remains in the membrane, which, in turn, generates membrane-disruptive activities, which eventually leads to the prevention of the membrane activities and a cytotoxic end result, if the number of damaged objects is large enough, or if the systems which restore the objects are not capable of eliminating the damage adequately.

For instance Bos et al. (Infect. Immun. 73(2005)2222) have found that the phospholipase A of the outer membrane of the *Nesseria* bacterium contributes to the autolysis of the bacterium in question in specific environmental conditions, such as a prolonged cultivation of bacteria. In addition, "altruistic" lysis has been found in *H. pylori,* to which, once again, OMPLA may contribute (Pütsep et al., Nature 398(1999)671; Dekker, Mol. Microbiol. 35(2000)711).

According to the present invention, a foodstuff or a foodstuff raw material is treated with pure nitrogen gas in order to prevent the growth of psychrotrophic and mesophilic microbes which produce phospholipase. Here, "prevent the growth" means that the level of the microbes increases at maximum by 1 log measured in CFU units, after a period of 3 days following the nitrogen treatment.

According to a preferred embodiment of the present invention, a sufficient quantity of nitrogen is used to reduce the oxygen content of the foodstuff or foodstuff raw material to a level which is below 2 ppm, especially below 1.5 ppm, most suitably below 0.5 ppm, preferably below 0.2 ppm and more preferably below 0.1 ppm.

The nitrogen gas used must be as pure as possible, especially its purity is at least approximately 95 % per volume, most suitably at least 97 % per volume, especially at least 99.5 % per volume, more preferably at least 99.99 % per volume. The nitrogen gas used is preferably essentially oxygen-free. Especially, the oxygen content is below 5 %, more preferably below 1 %, most suitably below approximately 0.5 %.

The treatment is carried out in association with the cold or cool storage of the foodstuff or foodstuff raw material. In these conditions, apparatuses which are not completely closed are generally used. Here, cool storage means in general a temperature which is below 15 °C, especially below 14 °C and most suitably at maximum 12 °C, and cold storage means a temperature which is approximately >0 - 8 °C, especially at maximum 6 °C, most suitably approximately 2 - 5 °C.

In connections with the present invention, it has been found that the efficiency of the influence of the nitrogen gas, which prevents the growth of the microbes which produce phospholipase, is affected by the storage temperature of the foodstuff material in such a way that the most efficient and extensive growth-preventing effect of the nitrogen gas is achieved particularly at temperatures which are higher or even substantially higher (for instance 12 °C) than the temperature limited (for instance 7 °C) which is the basis for the classification of the psychrotrophic microbes.

Consequently, according to one embodiment of the present invention, foodstuff or its raw material is treated at a temperature of approximately 10 to 15 °C, preferably approximately 11 to 14 °C. According to another preferred embodiment, the nitrogen gas treatment, according to the present invention, is combined with the cold chain of the foodstuffs, in which case the treatment is carried out at a maximum temperature of 6 °C (but above freezing point). According to a third embodiment, the operating temperature is above 6 °C but below 10 °C.

It is possible to measure the effectiveness of nitrogen gas for preventing growth of phospholipase for instance as a difference in the number of haemolytic microbes in the foodstuff or foodstuff material, which is an indication of the growth-preventing effect of the nitrogen gas, which effect is directed at the microbes, which produce phospholipase-transmitted virulence factors (see Example 6 below).

The method is applied in a non-hermetic space. In this case, it is essential that an adequate quantity of nitrogen gas flows into the space, displacing the existing air and/or the air leaking into that space. The oxygen must be removed both from the foodstuff to be stored or, correspondingly, the foodstuff raw material, and, also, from the surrounding air, as efficiently as possible, in practice in such a way that it is possible to keep the level of oxygen in the foodstuff or foodstuff raw material below 0.1 ppm.

In the present context, "an open vessel" means in general "an open system", which can be formed, for instance, of a store room or some other large space.

According to the present invention, foodstuff raw material is treated in open systems, whereas the end products can be brought to form a closed space, too (closed packages, possibly with a protecting gas).

The treatment time for achieving the desired gaseous conditions in the system (oxygen and/or nitrogen percentage) varies depending on the nature and quantity of the foodstuff or its raw material, and on the purity and the flow rate of the nitrogen gas, and, also, the structure and the properties of the system to be treated. In practice, the treatment time can vary from approximately 1 minute to 24 hours, however, most suitably the treatment time is at least approximately 1.5 minutes to 12 hours, especially approximately 5 minutes to 5 hours. Further processing can continue for days or even weeks, as appropriate.

In the present invention, "the treatment time" in the first stage describes the period during which the desired gaseous conditions are achieved, by introducing nitrogen gas into the foodstuff or foodstuff raw material; thereafter, "the treatment" means the periods of time during which the raw material or the foodstuff is exposed in order to prevent undesirable microbiological changes. Accordingly, for raw milk a treatment time of approximately 30 minutes in the conditions according to Example 1 is enough to achieve the described N1 and N2 conditions, but the actual treatment of raw milk lasted for 11 days in Example 2.

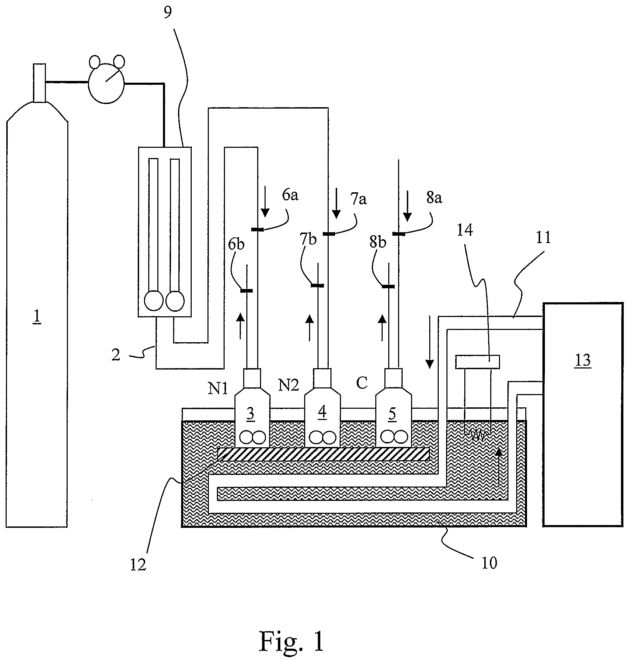

When a liquid foodstuff or foodstuff raw material is treated, it is possible to bubble nitrogen gas into the foodstuff or raw material, for instance through the bottom or the sides of the storage container. Alternatively, it is possible to lead the nitrogen gas into the gaseous space surrounding or above the foodstuff, as shown in the apparatus in Figure 1.

It is possible that the nitrogen gas generates changes in the structure of the cytoplasmic membrane, which lead to the bacteria which secrete phospholipases becoming sensitive (themselves) to the effects of the phospholipase they produce, which sensitivity in turn causes the bacteria to self-destruct. In cases where oxygen is absent, the effect of the nitrogen in changing the structure of the membrane may be even more powerful, which could explain why anaerobic phospholipase-positives are found to be particularly sensitive to the effects of nitrogen gas. The mechanism by which nitrogen gas affects the membrane is supported by the reported findings, which show that the growth-preventing effect of nitrogen gas on phospholipase-positive bacteria is temperature-dependent in such a way that for instance at 7 °C, it was still impossible to detect this effect of the nitrogen gas, but at 12 °C, the effect of the nitrogen gas was obvious.

Because of the fatty acid composition of the phospholipids of the membrane, their physicochemical properties are very temperature-dependent, which might cause, at 12 °C, but not yet at 7 °C, the interaction between the nitrogen gas and the membrane to be strong enough. In addition, the transitional phase kinetics, described in the examples, of the number of the phospholipase-positives in the nitrogen gas treatment may be related to the compositional differences in phospholipide of the bacteria that occur in the different stages of development of bacterial population in the raw milk, in which case there are also differences in how efficiently the nitrogen gas interacts with the phospholipids of the membrane, which differences depend on the phospholipid and/or fatty acid composition. Alternatively, it is possible that the nitrogen gas interacts with the proteins which are associated with or affect the metabolism of the phospholipids, and as a result the obvious cytotoxicity of the nitrogen is effected.

However, it should be pointed out that the description above is only one possible explanation of the phenomenon found in the present invention.

In addition to the above-mentioned properties of the pathogenic factors, the phospholipases also have properties which destroy foodstuffs and their raw materials. For instance, the fat globules of milk are sensitive to the effects of the phopholipases, because the surface of the fat globules comprises a membrane structure which is formed as a result of the exocytosis process of the fat globule. Inside the fat globule, there is a core part which comprises mainly triacylglycerol, which part is protected from the effect of the lipases, as long as the membrane of the fat globule is intact. The microbes, which produce the phospholipases in milk, break the surface structure of the fat globules and in that way result in an integration of the fat globules (amalgamation of damaged membranes of the fat globules), aggregation and a movement by the lipases, which are in the milk (either the milk's own lipases or the lipases produced by microbes in the milk), into the core part of the fat globule, at the place where the membrane is damaged, thus generating lipolytic deterioration reactions, particularly a deterioration in taste caused by the free fatty acids which are released.

In this way, the elimination of the growth of the phospholipase-positive bacteria by using nitrogen gas makes it possible to produce high-quality raw materials and foodstuffs, too.

In addition to the special effect of the nitrogen gas, which effect is directed at the phospholipase-positive microbes, it is possible to delay or even prevent, by means of the nitrogen gas, depending on the temperature, the growth of different microbe groups, as described in the examples. For instance at 6 °C, it is possible to keep the total number of bacteria in raw milk at a constant level for the entire 11 days during which the populations are measured, if an adequate quantity of nitrogen gas is available to the system. Furthermore, this condition can be generated in a space which is not closed, i.e. in conditions in which nitrogen gas flows through or above the foodstuff.

The growth-preventing or growth-inhibiting effect of the nitrogen gas on bacteria cannot be explained only by the exclusion of the oxygen from the system, because the growth of fermentative and anaerobic bacteria, too, are somewhat delayed, even though not prevented, by the influence of the nitrogen gas.

Furthermore, the nitrogen gas does not cause microbiological problems in the system, for instance by generating sporulation of spore-carrying vegetative bacteria or because of germination of spores, as the example of the monitoring of the spore count (withstands 10 min heat treatment at 80 °C) of raw milk shows.

By combining a low temperature and the growth-preventing effects of nitrogen gas on microbes, it is possible to control synergistically the microbiological safety and quality of the foodstuff and the raw material used for its production.

The most readily applicable combination of conditions must be found for each foodstuff and its raw material, because the microbiological and technological properties of the materials are very material-dependent and the production and operating conditions vary.

It is possible to carry out the treatment according to the present invention before the pasteurisation of a raw material used for the production of the foodstuff, in which case a pasteurised foodstuff product is developed, the microbe content of which is particularly low and with which treatment it is possible also to limit the number of such microbes which cannot be totally removed by applying pasteurisation. It is also possible to carry out a nitrogen treatment, as an alternative or in addition to the above, in the final stage of the production process of the foodstuff, as a part of the packaging stage before and/or together with the encasing of the product in the retail package.

It has been found that the nitrogen gas prolongs shelf life after pasteurisation of the foodstuff. In an embodiment of the present invention, the improvement of the shelf life of the end product is based on nitrogen gas protecting of the product at the packing stage, for instance nitrogen gas treatment of a pasteurised liquid product in the tank in the packing stage before the product is packed in its retail package, and using a treatment time which generates a desired gas composition in the product (for instance 30 minutes in the system of Example 1), and/or filling the package comprising the product with a protecting gas, before closing the package. Examples of such products are the milk-based products listed below.

In order to guarantee the product safety of the end product, pasteurisation processes are carried out on the standardised milks and creams used in the production of the products (standardised fat content of the product), and process milk, such as cheese milk, from which, by using starters etc, different milk-based products which comprise starter microbes, such as cheeses, are produced.

It is known that pasteurisation carried out at 71 °C or 72 °C reduces the amounts of the most important pathogens by approximately 15 log units, whereas the thermoduric bacteria count remains relatively high. Generally, pasteurisation reduces the total microbe level by slightly over 1 log unit, i.e. more than 90 % of all the microbes in the initial material are destroyed. According to a preferred embodiment of the present invention, in which embodiment nitrogen treatment is combined with pasteurisation, it is possible to reduce the initial level in raw milk from a level of approximately 4 log CFU/ml to a level which is at maximum approximately 3 log CFU/ml, in which case the microbe levels after the pasteurisation are typically at maximum approximately 2 log CFU/ml or less.

By using the present invention, it is possible to simultaneously delay or, depending on each storage temperature, prevent the growth of other microbes, too, besides psychrotrophic and mesophilic microbes, both of which can be aerobic and anaerobic, which produce phospholipase, in a foodstuff or a foodstuff raw material, without the sporulation and germination processes of the spore-bearing microbes being activated at the same time.

Such bacteria species, which are pathogenic to humans and which spread via foodstuffs and in which phospholipase is or possibly is a virulence factor, are for instance *Listeria monocytogenes, Staphylococcus aureus, Bacillus cereus* and *Clostridium perfringens,* which belong to the gram-positive bacteria, and for instance *Pseudomonas aeruginosa, Yersinia enterocolitica, Helicobacter pylori* and *Campylobacter jejuni,* which belong to the gram-negative bacteria. In addition, the strains of the *Bacillus cereus* species and the *Pseudomonas* species, which are mainly counted among the raw milk spoiling bacteria, are generally phospholipase-positive (lecithinase-positive). The phospholipase-positive bacteria are typically haemolytic, i.e. they cause disintegration of red blood cells in a dish for culturing blood, which appears as a bright zone (haemolysis ring) around the bacteria colony which is cultivated in the dish.

It should be noted that, besides the phospholipases, also other molecules produced by bacteria, such as different membrane-active toxin peptides and proteins, can cause haemolytic properties. The haemolytic and cytotoxic effect of these are directly derived from their interaction with the structural components of the membrane in such a way that certain basic_functions of the membrane are prevented, such as the ability to maintain ionic gradients. In an example it has been demonstrated that, at the same time as the phosphilipase-positive (lecithinase-positive) bacteria are found to disappear because of the impact of the nitrogen gas, the haemolytic bacteria, too, disappear or their number is reduced.

Furthermore, the examples below demonstrate that the anaerobic phospholipase-positive (lecithinase-positive) bacteria are particularly sensitive to the growth-preventing effect of nitrogen gas, because a lower flow level of nitrogen was enough to prevent the growth of the bacteria in question in raw milk

It should be pointed out that, although the present invention is described mainly in the light of examples based on raw milk samples and by referring to the apparatus shown in the drawings, the present invention, with regard to the apparatus or the foodstuff raw material, is in no way restricted to these examples. Consequently, it is possible to apply the effects of nitrogen gas to other foodstuff raw materials, too, and to foodstuffs made of these. Generally, the present invention can be used to improve the cold storage of, not only raw milk, but also milk-based products such as milk, sour milk, cream, sour whole milk, yoghurt, fresh cheese, aged cheese and butter. The present invention is also suitable for the preservation of other protein-containing and fatty products, such as meat and fish. Because most of the foodstuff raw materials are solid, the abovementioned log CFU values, which are counted in millilitres, should be changed to the corresponding log CFU/g units.

### Example 1

With the device shown in Figure 1, the effect of nitrogen gas on the natural microflora in raw milk (volume approximately 125 ml) was examined by replacing the air (control) in an open vessel (volume approximately 250 ml) at a constant temperature, with a flow-through of 100 % nitrogen gas (purity 99.999 %, manufacturer AGA) at two different flow-through rates: N1 = 120 ml/min, N2 = 40 ml/min.

The apparatus comprises a nitrogen source (1), which is connected by means of a flow channel (2) to two sample bottles (3 and 4). The device also comprises a bottle (5) which contains a reference sample. Filters (6a, 6b, 7a, 7b and 8a, 8b) are connected to the gas flow channels (2), which are made of silicon pipe/hose. The pore size of the filters is 0.2 µm. A flow meter is attached to the flow channels (2), in order to allow the rate at which the gas flows are to be adjusted.

The sample bottles are placed in a water bath (10). Magnets and magnetic mixers (12) are used to mix the contents of the bottles. The water of the water bath (10) is cooled with a cooling coil (11) which is connected to a cooling unit (13), and the entire test apparatus is placed in a cold store, the temperature of which is 5 °C (except the nitrogen bottle). The water temperature of the water bath (10) is adjusted to a desired temperature with the help of an adjustable submersible thermostat (14).

The temperature of the raw milk in the sample bottles was adjusted by means of the thermostat (14) of the water bath to bring the temperature of the milk to 6.0 °C, 7.0 °C or 12.0 °C. The temperature variation in the vessel was less than ±0.1 °C.

In the control (C) environment, the measured oxygen content of the raw milk was 10.5 ppm (at 12 °C), in the N2 environment 1.1 ppm (at 12 °C), and in the N1 environment less than 0.1 ppm (at 12 °C). These conditions were reached at approximately 30 minutes from the beginning of the treatment. In other words, by applying the N2 environment, it is possible to reduce the oxygen content of raw milk to a level of approximately 10 % of the control and in the N1_environment, to a level of less than 1 % of the control, which corresponds to the 100 % level.

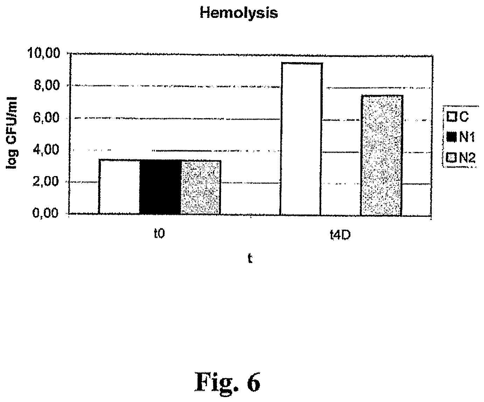

The nitrogen treatment apparatus according to Figure 1 is an open system which allows the outdoor air to be in direct contact with the milk to be treated in the vessel, in which vessel the micro filters (figures 6b, 7b, 8a and 8b) each having a membrane hole size of 0.2 µm, prevent the microbes in the outdoor air from reaching the raw milk (in order to have microbiologically controlled test conditions), but which filters do not prevent the gases from flowing through the membrane and thus for instance do not prevent the access of the outdoor air oxygen into the vessel and further into the raw milk in the vessel.

### Example 2

The effect of nitrogen gas on the growth of the microflora in a raw milk sample at 6.0 °C. Two flow-through rates of the nitrogen gas were used in the study: (▲) 40 ml/ min and (●) 120 ml/min. (○) The control, which does not have any flow-through, is exposed to air in a sterile manner. The following bacterial levels were determined in the samples:

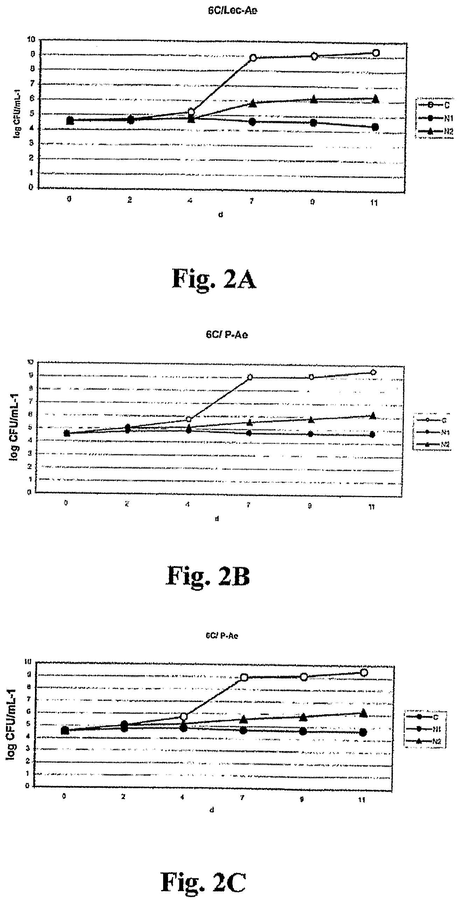

Figure 2A: Total bacteria count (p.m.y./ml)
Figure 2B: Total number of psychrotrophs (p.m.y./ml)
Figure 2C: Total number of proteolytic bacteria (p.m.y./ ml)

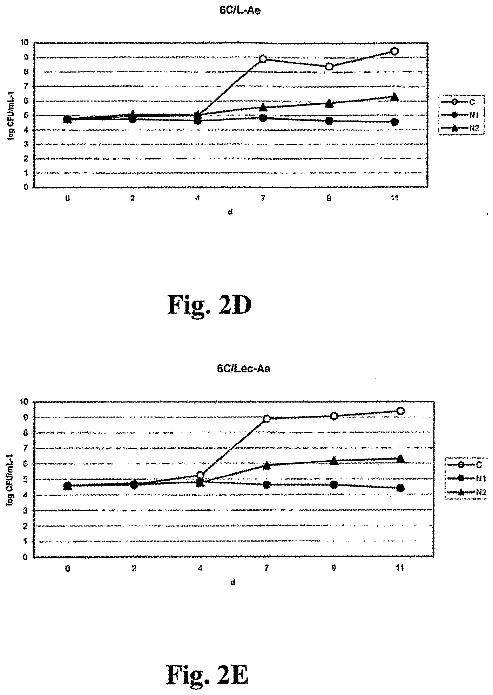

Figure 2D: Total number of lipolytic bacteria (p.m.y./ ml)
Figure 2E: Total number of bacteria producing phospholipase (p.m.y./ml).

At the temperature of 6.0 °C, the N1 environment totally prevents the growth of the bacteria during the measurement period of 11 days, and the N2 environment, too, is capable of preventing the growth of the microbes for 7 days (the level increased by less than 1 log-unit during a period of 3 days).

### Example 3

The effect of nitrogen gas on the growth of the microflora in a raw milk sample at 7.0 °C. Two flow-through rates of the nitrogen gas were used in the study: (▲) 40 ml/ min and (●) 120 ml/min. (○) The control, which does not have any flow-through, is exposed to air in a sterile manner. The following bacterial levels were determined in the samples:

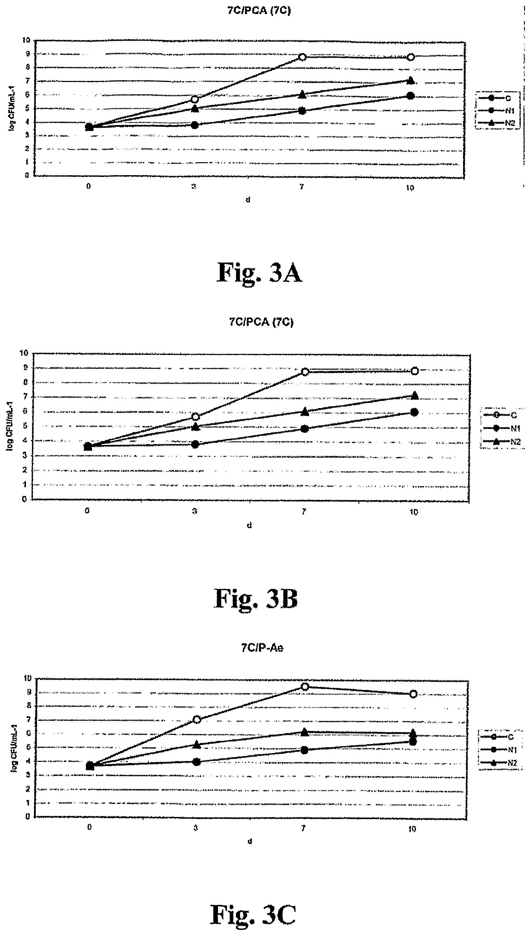

Figure 3A: Total bacteria count (p.m.y./ml)
Figure 3B: Total number of psychrotrophs (p.m.y./ml)
Figure 3C: Total number of proteolytic bacteria (p.m.y./ ml)

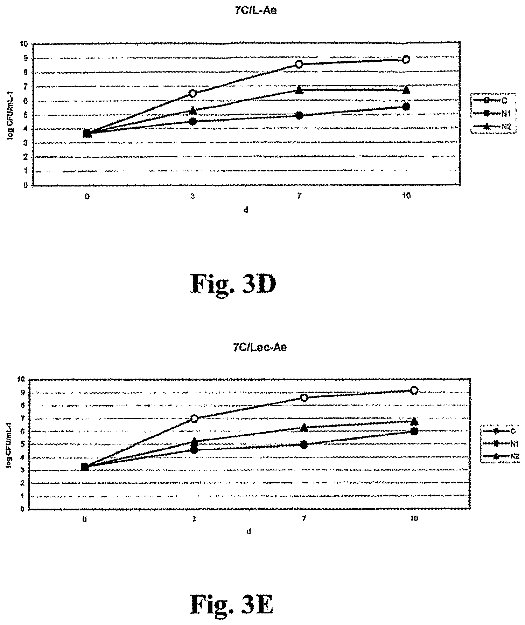

Figure 3D: Total number of lipolytic bacteria (p.m.y./ ml)
Figure 3E: Total number of bacteria producing phospholipase (p.m.y./ml).

At the temperature of 7.0 °C, the N1 environment still prevents (according to the definition above, i.e. the log increases by less than one unit in 3 days) the total growth/the growth of the microbes, and the N2 environment delays the growth of the total microbial count, although it cannot totally prevent the growth.

### Example 4

The effect of nitrogen gas on the growth of the microflora in a raw milk sample at 12.0 °C. Two flow-through rates of the nitrogen gas were used in the study: (▲) 40 ml/ min and (●) 120 ml/min. (○) The control, which does not have any flow-through, is exposed to air in a sterile manner. The following bacterial levels were determined in the samples:

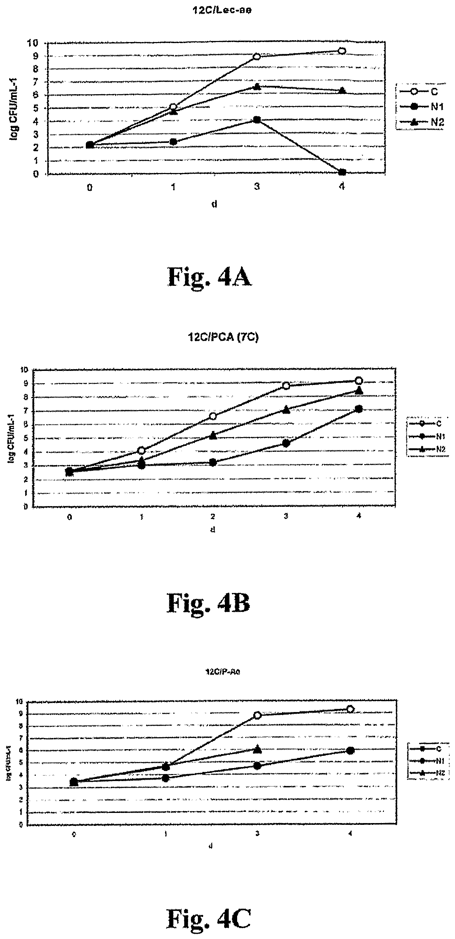

Figure 4A: Total bacteria count (p.m.y./ml)
Figure 4B: Total number of psychrotrophs (p.m.y./ml)
Figure 4C: Total number of proteolytic bacteria (p.m.y./ ml)

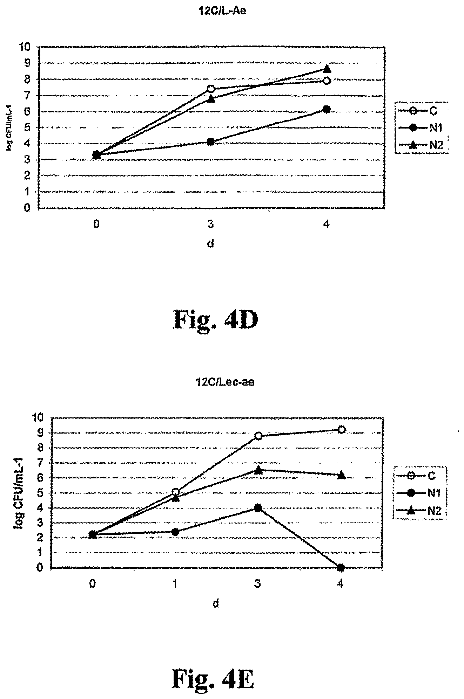

Figure 4D: Total number of lipolytic bacteria (p.m.y./ ml)
Figure 4E: Total number of bacteria producing phospholipase (p.m.y./ml).

At the temperature of 12.0 °C, the N1 environment still prevents or nearly prevents the growth of the total microbial count, but no longer prevents the growth of the psychrotrophs, instead it delays it. In this environment, it can be seen that the microbes which produce phospholipase are eliminated, within 96 hours from the beginning of the nitrogen gas treatment, from the raw milk (figure E) in the N1 environment, and that the growth of the number of the microbes which produce phospholipase ceases in the N2 environment after 3 days.

### Example 5

The effect of nitrogen gas on the growth of the microflora in a raw milk sample at 12.0 °C. Two flow-through rates of the nitrogen gas were used in the study: (▲) 40 ml/ min and (●) 120 ml/min. (○) The control, which does not have any flow-through, is exposed to air in a sterile manner. The following bacterial levels were determined in the samples:

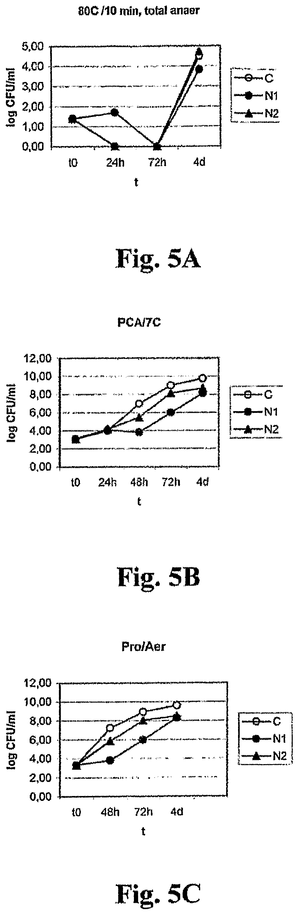

Figure 5A: Total bacteria count (p.m.y./ml)
Figure 5B: Total number of psychrotrophs (p.m.y./ml)
Figure 5C: Total number of proteolytic bacteria (p.m.y./ ml)

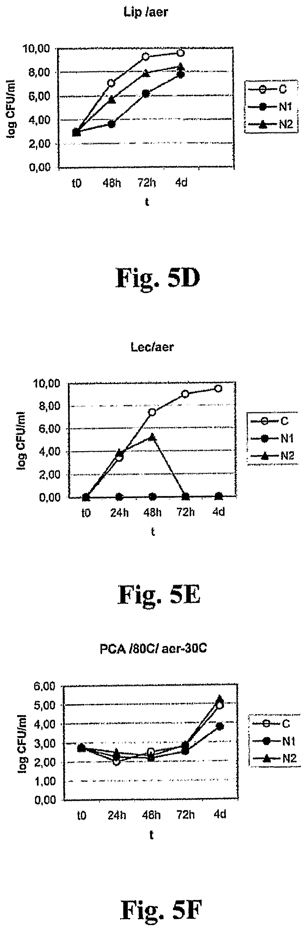

Figure 5D: Total number of lipolytic bacteria (p.m.y./ ml)
Figure 5E: Total number of bacteria producing phospholipase (p.m.y./ml).
Figure 5F: Total number of spores (p.m.y./ml)

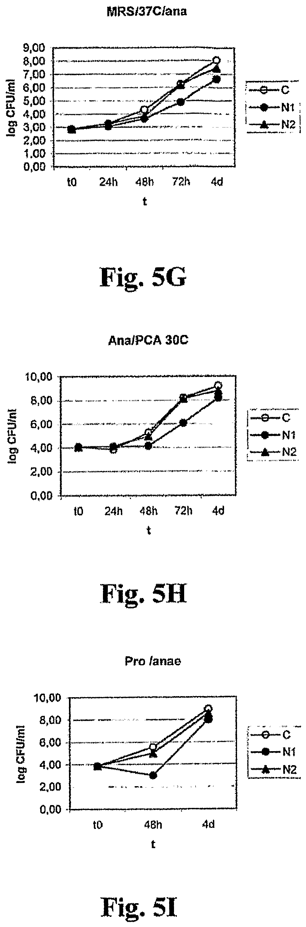

Figure 5G: Total number of bacteria of the lactobacillus type (p.m.y./ml)
Figure 5H: Total number of anaerobically cultivated bacteria (p.m.y./ml)
Figure 5I: Total number of anaerobically cultivated proteolytic bacteria (p.m.y./ml)

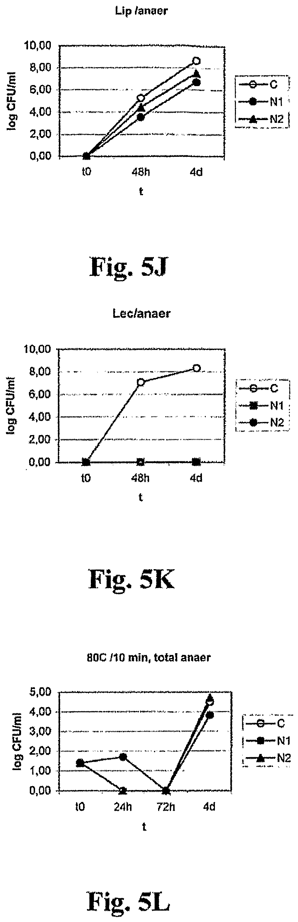

Figure 5J: Total number of anaerobically cultivated lipolytic bacteria (p.m.y./ml)
Figure 5K: Total number of anaerobically cultivated phospholipase-producing bacteria (p.m.y./ml)
Figure 5L: Total number of spores, when the cultivation is performed anaerobically (p.m.y./ml).

At the temperature of 12.0 °C, the N1 environment can substantially delay the growth of the total number of the microbes and, similarly, the growth of the psychrotrophs, in this sample of raw milk. The difference compared with example 4, where the growth could be said to be delayed, is that the raw milk samples differ from each other regarding their microbe level and composition, and, consequently, different effects of the nitrogen gas can be expected, such as in this case.

In addition, Example 5 in particular shows that the N1 environment is able to delay the growth of microaerobic/fermentative microbes (such as lactobacilli) (figure 5G) and anaerobic microbes (Figure 5H), and the environment does not increase the formation (sporulation) of aerobic (Figure 5F) spores, such as *B. cereus,* which are harmful to raw milk, or anaerobic (Figure 5L) spores, such as *C*. *tyrobutyricum.* Example 4, and Example 5, too, demonstrate the total prevention of growth of the aerobic bacteria, which secrete phospholipase, in the N1 environment and also in the N2 environment, after 2 days (Figure 5E) and, in addition, they demonstrate a total prevention of growth of the anaerobic bacteria, which secrete phospholipase, in both N1 and N2 environment (Figure 5K). The microbes which produce proteases and lipases, aerobic as well as anaerobic microbes, behave like the corresponding psychrotrophic microbes (Figures 5B, 5C and 5D for the aerobic, and Figures 5H, 5I and 5J for the anaerobic). In other words, the anaerobic microbes which secrete phospholipase are even more sensitive to the growth-preventing effect of the nitrogen gas than the aerobic microbes which secrete phospholipase, in this sample of raw milk (compare the N2 environment in Figures 5E and 5K).

### Example 6

Figure 6 shows the effect of nitrogen gas at 12.0 °C on the number of the haemolytic bacteria in the raw milk sample described in Figure 5, at the beginning of the nitrogen gas treatment and after four days. Two flow-through rates of the nitrogen gas were used in the study: (grey) 40 ml/ min and (black) 120 ml/min. The control (white), which does not have any flow-through, is exposed to air in a sterile manner.

The raw milk which is examined in Example 5 contains at 12.0 °C almost exclusively haemolytic microbes following four days of treatment in the control environment, but contains none in the N1 environment, and 2 log-units less in the N2 environment; moreover, both N1 and N2 environments had a less haemolytic nature, too. The example demonstrates the growth-preventing effect of the nitrogen gas on the microbes which manifest a haemolytic virulence factor and which have been identified in aerobic cultivation conditions in blood culture dishes (Figure 6) and, at the same time, manifest in this context the role of the microbes which produce phospholipase_(Figure 4E).

### Example 7

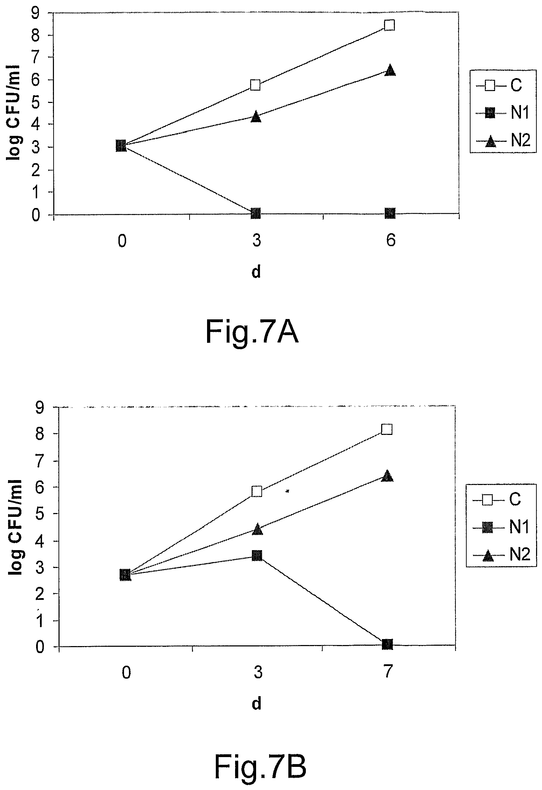

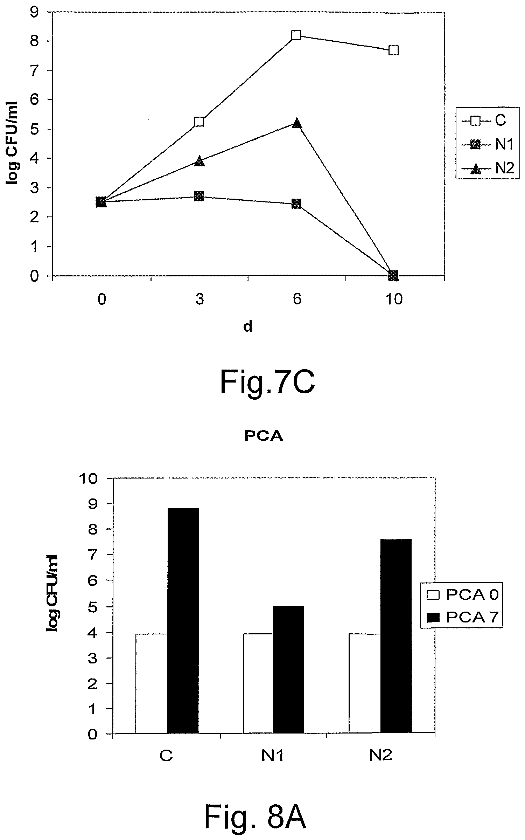

Figures 7A-C show the effect, in three different samples of raw milk (samples A, B and C), of nitrogen gas at 6.0 °C on the number of the bacteria which produce phospholipase. Two flow-through rates of the nitrogen gas were used in the study: (▲) 40 ml/ min, i.e. the N2 environment, and (●) 120 ml/min, i.e. the N1 environment. (□) The control, which does not have any flow-through, is exposed to air in a sterile manner.

The example shows that the rate at which the nitrogen gas treatment impacts on the elimination of the bacteria which produce phospholipase in the raw milk is sample-specific and variable, but if the treatment period is adequately long, it is possible to eliminate the bacteria which produce phospholipase at 6 °C, as well, if the effect of the nitrogen gas treatment is also adequate (the N1 environment, i.e. 120 ml/min). Evidently, in the three raw milk samples tested, the total number of the bacteria which produce phospholipase and the bacterial composition, and also the total number of microbes and the microbial composition, are different from each other and, consequently, the total effect of the nitrogen gas treatment depends on the qualitative and the quantitative properties of the microflora of the raw milk that is being treated.

### Example 8

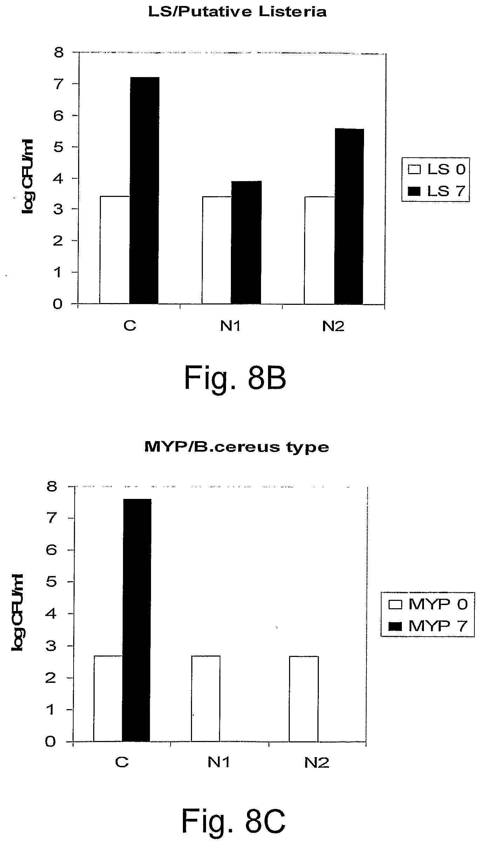

Figure 8 shows the effect of nitrogen gas on the number of bacteria which are counted among certain examined classes/groups in a raw milk sample (same sample as in Figure 7B), at 6.0 °C, at the beginning of the nitrogen treatment (white bar) and after 7 days (black bar). Two flow-through rates of the nitrogen gas were used in the study; (N2) 40 ml/ min and (N1) 120 ml/min. (C) The control, which does not have any flow-through, is exposed to air in a sterile manner. Figure 8 shows the total bacteria count (p.m.y./ml), derived from a PCA dish cultivation (Plate Count Agar)/30 °C/72 hours. Figure 8B, by contrast, shows the number of bacteria of the *Listeria-type* (p.m.y./ml), derived from the findings of a dish culture which enriches the listeria bacteria (Listeria Enrichment Media LAB 138, manufacturer LAB M) /30 °C/72 hours.

Figure 8C shows the number (p.m.y./ml) of the bacteria which belong to the species *Bacillus cereus,* derived from counting the number of colonies (mannitol-negative and lesithinase-positive colonies) which are typical of the *B. cereus* species, cultivated in a mannitol egg yolk polymyxin B dish, i.e. MYP dish (manufacturer Oxoid) /30 °C/3 days.

Example 8 shows that the species *Bacillus cereus* is an example of a bacteria species which produces phospholipase and which is particularly sensitive to the growth-preventing and eliminating effect of the nitrogen gas treatment, because the milder N2 environment (40 ml/min), too, was adequate for eliminating the bacteria of the *B. cereus* type from raw milk after 7 days. The example also demonstrates that there are differences between the bacteria species which produce phospholipase with regard to their sensitivity to the nitrogen gas treatment.

## Claims

1. A method of improving the safety, quality and durability of foodstuffs which are stored in cold or cool conditions and of raw materials used for the production of them, **characterized in that** the foodstuff or the foodstuff raw material is treated with essentially pure nitrogen gas in an open vessel by leading nitrogen gas into a non-hermetic gas space surrounding said foodstuff or said raw material, the nitrogen gas being used in a sufficient quantity for reducing the oxygen content of the foodstuff or of the foodstuff raw material to a level of below 2 ppm and for preventing the growth of psychrotrophic and mesophilic microbes, which produce phospholipase, in the foodstuff or foodstuff raw material.

2. The method according to Claim 1, **characterized in that** the foodstuff or the foodstuff raw material is treated with nitrogen gas in a quantity sufficient for reducing the oxygen content of the foodstuff or of the foodstuff raw material to a level of below 1.5 ppm, more preferably below 0.2 ppm and in particular below a level of 0.1 ppm.

3. The method according to Claim 1, **characterized in that** the foodstuff or the foodstuff raw material is treated at a temperature of 10 to 15 °C, especially approximately 11 to 14 °C.

4. A method according to Claim 1 or 2, **characterized in that** the foodstuff or the foodstuff raw material is treated at a temperature of at maximum 6 °C.

5. A method according to Claim 1 or 2, **characterized in that** the foodstuff or the foodstuff raw material is treated at a temperature which is above 6 °C but below 10 °C.

6. A method according to any of the preceding claims, **characterized in that** nitrogen gas is used, the purity of which is at least 95 % per volume, preferably at least 99.5 % per volume, in particular at least 99.999 % per volume.

7. A method according to any of the preceding claims, **characterized in that** the treatment is carried out before the raw material, which is used in the production of the foodstuff, is pasteurised, and/or after that, in the final stage of the production process of the foodstuff, as a part of the packaging stage before and/or accompanying the encasing of the product into the retail package.

8. A method according to any of the preceding claims, **characterized in that** raw milk and milk-based products are treated, such products as milk, sour milk, cream, sour whole milk, yoghurt, fresh cheese, aged cheese or butter.

9. A method according to claim 7 or 8, **characterized in that** the total microbe count in the raw milk or standardised milk after the pasteurisation is at maximum approximately 3 log CFU/ml, preferably at maximum approximately 2 log CFU/ml.

## Patentansprüche

1. Verfahren zur Verbesserung der Sicherheit, der Qualität und der Haltbarkeit von Lebensmitteln, die unter kalten oder kühlen Bedingungen gelagert werden, sowie von den zu deren Herstellung verwendeten Rohstoffen, **dadurch gekennzeichnet, dass** das Lebensmittel oder der Lebensmittel-Rohstoff in einem offenen Behälter mit im Wesentlichen reinem Stickstoffgas behandelt wird, indem Stickstoffgas in einen nicht hermetischen, das Lebensmittel oder den Rohstoff umgebenden Gasraum geleitet wird, wobei das Stickstoffgas in einer ausreichenden Menge verwendet wird, um den Sauerstoffgehalt in dem Lebensmittel oder dem Lebensmittel-Rohstoff auf ein Niveau unterhalb von 2 ppm zu reduzieren und das Wachstum von Phospholipase produzierenden psychrotrophen und mesophilen Mikroben in dem Lebensmittel oder dem Lebensmittel-Rohstoff zu verhindern.

2. Verfahren nach Anspruch 1, **dadurch gekennzeichnet, dass** das Lebensmittel oder der Lebensmittel-Rohstoff mit einer ausreichenden Menge Stickstoffgas behandelt wird, um den Sauerstoffgehalt des Lebensmittels oder des Lebensmittel-Rohstoffs auf ein Niveau unterhalb von 1,5 ppm, vorzugsweise unterhalb von 0,2 ppm und insbesondere auf ein Niveau unterhalb von 0,1 ppm zu reduzieren.

3. Verfahren nach Anspruch 1, **dadurch gekennzeichnet, dass** das Lebensmittel oder der Lebensmittel-Rohstoff bei einer Temperatur von 10 bis 15 ºC, insbesondere bei etwa 11 bis 14 ºC behandelt wird.

4. Verfahren nach Anspruch 1 oder 2, **dadurch gekennzeichnet, dass** das Lebensmittel oder der Lebensmittel-Rohstoff bei einer Temperatur von maximal 6 ºC behandelt wird.

5. Verfahren nach Anspruch 1 oder 2, **dadurch gekennzeichnet, dass** das Lebensmittel oder der Lebensmittel-Rohstoff bei einer Temperatur behandelt wird, die über 6 ºC aber unter 10 ºC liegt.

6. Verfahren nach einem der vorstehenden Ansprüche, **dadurch gekennzeichnet, dass** Stickstoffgas verwendet wird, dessen Reinheit mindestens 95 Vol.-%, vorzugsweise mindestens 99,5 Vol.-% und insbesondere mindestens 99,999 Vol.-% beträgt.

7. Verfahren nach einem der vorstehenden Ansprüche, **dadurch gekennzeichnet, dass** die Behandlung vor der Pasteurisierung des bei der Herstellung des Lebensmittels verwendeten Rohstoffs und/oder danach in der Endphase des Herstellungsprozesses des Lebensmittels als Teil der Verpackungsphase vor und/oder während der Abpackung des Produkts in die Verkaufsverpackung durchgeführt wird.

8. Verfahren nach einem der vorstehenden Ansprüche, **dadurch gekennzeichnet, dass** Rohmilch und Milchprodukte wie Milch, saure Milch, Sahne, saure Vollmilch, Joghurt, Frischkäse, reifer Käse oder Butter behandelt werden.

9. Verfahren nach Anspruch 7 oder 8, **dadurch gekennzeichnet, dass** die Gesamtanzahl der Mikroben in der Rohmilch oder der standardisierten Milch nach der Pasteurisierung maximal etwa 3 log KBE/ml, vorzugsweise maximal etwa 2 log KBE/ml beträgt.

## Revendications

1. Procédé d'amélioration de la sécurité, de la qualité et de la durabilité de denrées alimentaires qui sont stockées au froid ou au frais et de matières premières utilisées pour leur production,
**caractérisé en ce que** la denrée alimentaire ou la matière première de denrée alimentaire est traitée avec de l'azote gazeux essentiellement pur dans une cuve ouverte en menant l'azote gazeux dans un espace de gaz non hermétique entourant ladite denrée alimentaire ou ladite matière première, l'azote gazeux étant utilisé en une quantité suffisante pour réduire la teneur en oxygène de la denrée alimentaire ou de la matière première de denrée alimentaire à un niveau en dessous de 2 ppm et pour empêcher la croissance de microbes psychrotrophes et mésophiles, qui produisent de la phospholipase, dans la denrée alimentaire ou la matière première de denrée alimentaire.

2. Procédé selon la revendication 1, **caractérisé en ce que** la denrée alimentaire ou la matière première de denrée alimentaire est traitée avec de l'azote gazeux en une quantité suffisante pour réduire la teneur en oxygène de la denrée alimentaire ou de la matière première de denrée alimentaire à un niveau en dessous de 1,5 ppm, plus de préférence en dessous de 0,2 ppm et en particulier en dessous d'un niveau de 0,1 ppm.

3. Procédé selon la revendication 1, **caractérisé en ce que** la denrée alimentaire ou la matière première de denrée alimentaire est traitée à une température de 10 à 15 °C, notamment d'approximativement 11 à 14 °C.

4. Procédé selon la revendication 1 ou 2, **caractérisé en ce que** la denrée alimentaire ou la matière première de denrée alimentaire est traitée à une température de 6 °C maximum.

5. Procédé selon la revendication 1 ou 2, **caractérisé en ce que** la denrée alimentaire ou la matière première de denrée alimentaire est traitée à une température qui est au-dessus de 6 °C mais en dessous de 10 °C.

6. Procédé selon l'une quelconque des revendications précédentes, **caractérisé en ce que** de l'azote gazeux est utilisé, dont la pureté est d'au moins 95 % par volume, de préférence d'au moins 99,5 % par volume, en particulier d'au moins 99,999 % par volume.

7. Procédé selon l'une quelconque des revendications précédentes, **caractérisé en ce que** le traitement est réalisé avant que la matière première, qui est utilisée pour la production de la denrée alimentaire, soit pasteurisée, et/ou après cela, à l'étape finale du processus de production de la denrée alimentaire, dans le cadre de l'étape d'emballage avant et/ou accompagnant l'enveloppement du produit dans l'emballage de détail.

8. Procédé selon l'une quelconque des revendications précédentes, **caractérisé en ce que** du lait cru et des produits à base de lait sont traités, des produits comme le lait, le lait fermenté, la crème, le lait entier fermenté, le yaourt, le fromage frais, le fromage vieilli ou le beurre.

9. Procédé selon la revendication 7 ou 8, **caractérisé en ce que** la numération totale de microbes dans le lait cru ou le lait standardisé après la pasteurisation est au maximum d'approximativement 3 log CFU/mL, de préférence au maximum d'approximativement 2 log CFU/mL.
